# EUROPÄISCHE PATENTSCHRIFT

(11) **EP 2 906 450 B1**
(45) Veröffentlichungstag und Bekanntmachung des Hinweises auf die Patenterteilung: **13.12.2017**
(21) Anmeldenummer: 13776471.8
(22) Anmeldetag: 10.10.2013
(51) Int. Cl.: B60R 11/04

(54) **ADGEDICHTETE VORRICHTUNG FÜR EINE KAMERA**
SEALED DEVICE FOR A CAMERA
DISPOSITIF ÉTANCHÉIFIÉ POUR UNE CAMÉRA

(30) Priorität: 10.10.2012 DE 102012109661
(43) Veröffentlichungstag der Anmeldung: 19.08.2015
(73) Patentinhaber: Huf Hülsbeck & Fürst GmbH & Co. KG, 42551 Velbert (DE)
(72) Erfinder: BUSCHMANN, Gerd, 42553 Velbert (DE); SCHÜTZ, Heiko, 42549 Velbert (DE)
(74) Vertreter: Bals, Rüdiger
(86) Internationale Anmeldenummer: PCT/EP2013/071226
(87) Internationale Veröffentlichungsnummer: WO 2014/057070

(56) Entgegenhaltungen:
- DE-A1-102009 008 281

## Beschreibung

Die Erfindung betrifft eine Vorrichtung mit einem Trägerelement, an dem eine Kameraeinheit, die zur Bilderfassung des Außenbereichs eines Kraftfahrzeugs dient, angeordnet ist, gemäß dem Oberbegriff von Anspruch 1. Diese Vorrichtung weist zumindest einen Antriebsmechanismus für die Kamera auf, der dazu dient, die Kameraeinheit zwischen einer Ruhestellung und einer Bilderfassungsstellung hin und her zu bewegen, wobei der Antriebsmechanismus am Trägerelement angeordnet ist, um die Kameraeinheit bewegbar zu halten. Ferner weist das Trägerelement eine vorderseitige Öffnung auf, durch die zumindest in der Bilderfassungsstellung für die Kameraeinheit Bilder erfassbar sind. Des Weiteren ist zumindest ein vorderseitiger Spalt zwischen der vorderseitigen Öffnung im Trägerelement und der Kameraeinheit vorgesehen, um die Kameraeinheit in die Bilderfassungsstellung überführen zu können. Durch diesen Spalt kann die Kameraeinheit aus der vorderseitigen Öffnung ragen oder zumindest die Bilderfassung vornehmen. Der vorderseitige Spalt ist durch ein Dichtungselement verschließbar, wobei das Dichtungselement den vorderseitigen Spalt zwischen der gesamten Hin-und Her-Bewegung der Kameraeinheit zwischen der Ruhestellung und der Bilderfassungsstellung abdichtet. Des Weiteren ist die Erfindung auch auf ein Verfahren zur Betätigung einer Vorrichtung mit einem Trägerelement, an dem eine Kameraeinheit, die zur Bilderfassung des Außenbereichs eines Kraftfahrzeugs dient, angeordnet ist, geeignet, gemäß dem Oberbegriff von Anspruch 15.

Aus dem Stand der Technik sind Vorrichtungen zum Schwenken von Kameraeinheiten hinlänglich bekannt. Aus der Druckschrift EP 1 529 688 B1 geht weiter eine derartige Vorrichtung zum Verschwenken einer Kameraeinheit hervor, bei der sowohl eine Ruhestellung als auch eine Bilderfassungsstellung der Kameraeinheit abgedichtet ist, um somit zu vermeiden, dass Schmutz durch eine vorderseitige Öffnung, durch die die Kameraeinheit die Bilderfassung vornimmt, gelangen kann. Allerdings hat sich herausgestellt, dass alleine bei einer Zwischenstellung der Kameraeinheit zwischen der Ruhestellung und der Bilderfassungsstellung immer noch Verschmutzungen ins Innere der Vorrichtung gelangen können, da z. B. die Kameraeinheit auch bei der Rückwärtsfahrt zwischen der Ruhestellung und der Bilderfassungsstellung hin und her geschwenkt wird.

Außerdem ist es aus dem Stand der Technik bekannt, den rückwärtigen Bereich der Kameraeinheit abzudichten, so dass auch keine Feuchtigkeit rückseitig an die Kameraeinheit gelangen kann. In der Druckschrift WO 2011/085745 A1 ist eine derartige Vorrichtung zum Verstellen einer Kameraeinheit bekannt, bei der der rückwärtige Bereich entsprechend abgedichtet ist. Ferner zeigt die Druckschrift DE 10 2009 008 281 A1 eine Vorrichtung mit einer Kameraeinheit zur Bilderfassung des Außenbereichs eines Kraftfahrzeuges, wobei die Kameraeinheit in ihrer Ruhestellung geschützt hinter einem Deckelelement in der Vorrichtung untergebracht ist.

Aufgabe der vorliegenden Erfindung ist es, eine Vorrichtung sowie eine Betätigungsverfahren für eine derartige Vorrichtung bereitzustellen, die die Nachteile aus dem Stand der Technik vermeidet. Insbesondere ist es Aufgabe der vorliegenden Erfindung, Verschmutzungen, die von vorne in die Vorrichtung eindringen können, möglichst weitgehend zu vermeiden.

Diese Aufgabe wird erfindungsgemäße durch eine Vorrichtung mit den Merkmalen des unabhängigen Anspruchs 1, insbesondere aus dem kennzeichnenden Teil, gelöst. Ebenfalls wird zur Lösung der Aufgabe ein Verfahren zur Betätigung einer Vorrichtung mit einem Trägerelement, an dem eine Kameraeinheit angeordnet ist, mit den Merkmalen des Anspruchs 15, insbesondere aus dem kennzeichnenden Teil, vorgeschlagen. In den abhängigen Vorrichtungs- und Verfahrensansprüchen sind bevorzugte Weiterbildungen der Erfindung aufgeführt. Merkmale, die zur erfindungsgemäßen Vorrichtung offenbart werden, gelten dabei auch für das erfindungsgemäße Betätigungsverfahren und umgekehrt. Außerdem kann das erfindungsgemäße Verfahren aus Anspruch 15 mit der erfindungsgemäßen Vorrichtung für eine Kameraeinheit realisiert werden.

Die erfindungsgemäße Vorrichtung weist eine Kameraeinheit auf, die an einem Trägerelement direkt oder indirekt über einen Schlitten, insbesondere mit einem Adapter, angeordnet ist. Die Kameraeinheit kann innerhalb der Vorrichtung über einen Antriebsmechanismus zwischen der Ruhestellung und der Bilderfassungsstellung hin und her bewegt werden. Zweckmäßigerweise ist der Antriebsmechanismus direkt oder auch indirekt am Trägerelement angeordnet. Das Trägerelement weist eine vorderseitige Öffnung auf, durch die zumindest in der Bilderfassungsstellung für die Kameraeinheit Bilder erfassbar sind. In der Bilderfassungsstellung ist zumindest ein vorderseitiger Spalt zwischen der vorderseitigen Öffnung im Trägerelement und der Kameraeinheit vorgesehen, da ansonsten die Kameraeinheit keine Bilderfassung vornehmen kann. Es ist nicht unbedingt notwendig, dass die Kameraeinheit mit ihrem Objektiv in der vorderseitigen Öffnung angeordnet ist, wenn die Bilderfassungsstellung erreicht ist. Vielmehr kann auch die Kameraeinheit ein wenig hinter der vorderseitigen Öffnung zum Stehen kommen und die gewünschten Bilder aufnehmen. Erfindungsgemäß ist es vorgesehen, dass der vorderseitige Spalt durch ein Dichtungselement verschließbar ist. Dabei kann das vorgesehene Dichtungselement den vorderseitigen Spalt zwischen der gesamten Hin- und Her-Bewegung der Kameraeinheit zwischen der Ruhestellung und der Bilderfassungsstellung abdichten. Somit ist es nicht möglich, dass Verschmutzungen in den rückwärtigen Raum des Trägerelements bzw. der erfindungsgemäßen Vorrichtung eindringen können. Somit kann auch der gesamte Antriebsmechanismus, der üblicherweise hinter der vorderseitigen Öffnung am Trägerelement angeordnet ist, vollständig geschützt werden.

Um die Kameraeinheit austauschbar in der erfindungsgemäßen Vorrichtung anzuordnen, kann diese an einen Schlitten angeordnet werden, der über einen Adapter verfügt, um somit einen leichten Austausch zu ermöglichen. Der Adapter kann hierzu einen Bajonettverschluss, Klemmverschluss oder Schraubverschluss aufweisen. Üblicherweise wird die Kameraeinheit über einen Kraft- und/oder Formschluss mittels des Adapters an dem Schlitten angeordnet. Der Schlitten ist dann wiederum mit dem Antriebsmechanismus verbunden, um die gesamte Kameraeinheit hin und her bewegen zu können. Selbstverständlich ist es im Rahmen der Erfindung auch denkbar, dass der Antriebsmechanismus direkt mit der Kameraeinheit zusammenwirkt. In diesem Fall wird dann auf dem Schlitten mit dem optional vorgesehenen Adapter verzichtet.

Wie aus den abhängigen Unteransprüchen weiter hervorgeht, kann das erfindungsgemäße Dichtungselement verschiedenartig ausgestaltet sein. So kann bei einem Dichtungselement eine geschlossene Membran vorgesehen sein. Ein andersartiges Dichtungselement ist borstenartig aufgebaut und weist abdichtende Borsten auf, die im vorderseitigen Spalt zwischen dem Trägerelement und der Kameraeinheit angeordnet sind. Bei einem weiteren Dichtungselement kommt eine gummiartige Umhüllung zum Einsatz, die über ein Federelement in dem vorderseitigen Spalt zwischen dem Trägerelement und der Kameraeinheit eingespannt ist.

Auf die optionalen Weiterbildungen der erfindungsgemäßen Vorrichtung wird im folgenden Text näher eingegangen.

Bei der erfindungsgemäßen Vorrichtung kann es vorgesehen sein, dass das Dichtungselement einerseits am Trägerelement und andererseits an der Kameraeinheit befestigt ist. Ferner ist es denkbar, dass das Dichtungselement am Trägerelement im Bereich des vorderseitigen Spalts und an der Kameraeinheit im vorderen Bereich befestigt ist. Durch die beidseitige Befestigung des Dichtungselements wird erreicht, dass der vorderseitige Spalt die ganze Zeit vom Dichtungselement verschlossen ist und zwar in jeder Stellung der Kameraeinheit zwischen der Ruhestellung und der Bilderfassungsstellung. Somit wird sichergestellt, dass keinesfalls Verschmutzungen von außen durch die vorderseitige Öffnung in die Vorrichtung gelangen können.

Um das Dichtungselement besonders einfach montieren und ggf. austauschen zu können, kann es vorgesehen sein, dass am Trägerelement und/oder an der Kameraeinheit ein Befestigungsflansch für das Dichtungselement vorgesehen ist. Hierbei kann der Befestigungsflansch als bereichsweise ebene Fläche ausgestaltet sein. Auch ist es denkbar, dass der Befestigungsflansch als Nut und/oder Ausbuchtung vorgesehen ist, so dass quasi eine Labyrinthdichtung im Bereich des Befestigungsflansches gebildet wird.

Zweckmäßigerweise kann es bei der erfindungsgemäßen Vorrichtung vorgesehen sein, dass das Dichtungselement über Haltemittel am Trägerelement und/oder an der Kamera befestigbar ist. Diese Haltemittel können auch einteilig zum Dichtungselement ausgestaltet sein. Allerdings ist es auch denkbar, dass die Haltemittel ein separates Bauteil zum Dichtungselement darstellen. Auch ist es möglich, dass zumindest ein Befestigungsflansch an der Kameraeinheit und/oder dem Trägerelement für die Befestigung durch die Haltemittel dient. Die Haltemittel selbst können auch durch das Dichtungselement gebildet werden, wenn dieses z. B. elastisch ausgestaltet ist und somit selbst eine Vorspannkraft erzeugen kann, die z. B. mit einem Befestigungsflansch an der Kameraeinheit und/oder dem Trägerelement zusammen wirkt.

Bei der Erfindung kann es optional vorgesehen sein, dass das Haltemittel am Trägerelement ein Stützelement, insbesondere in Form eines Stützrahmens aufweist. Hierbei kann das Dichtungselement zwischen dem Trägerelement und dem Stützrahmen eingeklemmt sein. Wie bereits erwähnt worden ist, ist es ebenfalls denkbar, dass der Stützrahmen bspw. am Trägerelement oder am Dichtungselement angeordnet ist, um somit eine zuverlässige Verbindung zwischen dem Trägerelement und dem Dichtungselement herstellen zu können. Das Stützelement kann aber auch als separates Bauteil ausgestaltet sein, welches z. B. über eine Verschraubung oder Verklemmung oder Verschweißung mit dem Trägerelement und/oder dem Dichtungselement in Verbindung gebracht werden kann. Vorteilhafterweise ist die Form bei einem Stützrahmen als Stützelement an die geometrische Ausgestaltung der vorderseitigen Öffnung des Trägerelements angepasst. Hierbei muss jedoch der Stützrahmen nicht durchgehend mit dem Trägerelement zusammen wirken, sondern er kann auch nur abschnittsweise oder punktuell das Dichtungselement an das Trägerelement pressen.

Ferner ist es erfindungsgemäß bei der Vorrichtung möglich, dass das Haltemittel an der Kameraeinheit als Spannelement, insbesondere als Spannring oder Spanndraht, ausgestaltet ist. Gerade dieses Spannelement kann auch integraler Bestandteil des Dichtungselements sein. Das Spannelement selbst kann elastisches Material aufweisen, wie z. B. Gummi, Silikon, oder Federdraht.

Auch ist es im Rahmen der Erfindung denkbar, dass das Dichtungselement direkt oder über das Haltemittel indirekt am Trägerelement bzw. an der Kameraeinheit befestigt ist. Hierbei kann das Dichtungselement sogar mit dem Trägerelement und/oder der Kameraeinheit stoff-und/oder kraftschlüssig verbunden bzw. befestigt sein. Bei einer besonderen Weiterbildung der erfindungsgemäßen Vorrichtung ist das Dichtungselement sowohl am Trägerelement als auch an der Kameraeinheit stoffschlüssig verbunden. Zu diesem Zweck kann das Dichtungselement eine Schutzmembran aufweisen.

Folglich ist es ebenfalls im Rahmen der Erfindung denkbar, dass das Dichtungselement eine Schutzmembran aufweist, die insbesondere hochflexibel ist und insbesondere eine vorgeformte Grundform aufweisen kann. Durch die Schutzmembran wird ermöglicht, dass das Dichtungselement sowohl direkt bzw. indirekt an dem Trägerelement als auch direkt bzw. indirekt mit der Kameraeinheit fest verbunden sein kann. Die Bewegungen der Kameraeinheit zwischen ihrer Ruhestellung und der Bilderfassungsstellung werden durch die Verformbarkeit der Schutzmembran aufgenommen. Zweckmäßigerweise weist die Schutzmembran eine dünne Schicht, insbesondere aus Kunststoff, Silikon oder Gummi, auf, um zuverlässig Schmutz von der Außenseite der erfindungsgemäßen Vorrichtung abschirmen zu können. Das Material der Schutzmembran kann auch semipermeabel ausgestaltet sein und z. B. gewebe- oder stoffartig aufgebaut sein. So kann z. B. eine atmungsaktive aber wasserundurchlässige Gewebeschicht als Schutzmembran zum Einsatz kommen. Das Dichtungselement selbst ist zumindest teilweise oder auch vollständig aus der Schutzmembran aufgebaut.

Bei der erfindungsgemäßen Vorrichtung ist es ferner denkbar, dass das Dichtungselement, insbesondere in Form der Schutzmembran, zumindest ein Dehnungsmittel aufweist. Durch dieses Dehnungsmittel kann erreicht werden, dass bei einem nicht dehnbaren Dichtungselement trotzdem eine Bewegung möglich ist. Allerdings kann das Dehnungselement selber auch aus einem dehnbaren und elastischen Material bestehen. Bei einem beweglichen nicht jedoch unbedingt elastisch ausgestalteten Dichtungselement kann das Dehnungsmittel bspw. durch Faltungen oder Überdeckungen realisiert werden. Selbstverständlich können diese Faltungen oder Überdeckungen auch bei einem elastischen Dehnungselement vorhanden sein. Somit kann auch vermieden werden, dass sich die Kameraeinheit zwischen der Ruhestellung und der Bilderfassungsstellung gegen die Zugkräfte des Dichtungselements bei einer elastischen Verformung bewegen muss.

Ebenfalls ist es im Rahmen der erfindungsgemäßen Vorrichtung denkbar, dass das Dichtungselement borstenartig ausgestaltet ist. Hierbei können die einzelnen Borsten so dicht aneinander angeordnet sein, dass sie den vorderseitigen Spalt vollständig verschließen. Zu diesem Zweck ist es vorteilhaft, wenn mehrere Borsten nebeneinander angeordnet sind und somit eine gewisse Abdichtungsbreite für das Dichtungsmittel bilden. Der Vorteil des borstenartigen Dichtungselements ist darin zu sehen, dass das Dichtungselement nur einseitig entweder an der Kameraeinheit oder dem Trägerelement befestigt werden braucht. Selbstverständlich kann auch dieses borstenartige Dichtungselement direkt oder indirekt z. B. über Haltemittel am Trägerelement und/oder der Kameraeinheit befestigt werden.

Bei einer besonders eleganten Weiterbildung der erfindungsgemäßen Vorrichtung kann es vorgesehen sein, dass das Trägerelement einen Bewegungskanal für die Kameraeinheit aufweist, in dem die Kameraeinheit aufgenommen ist. Hierbei ist die Kameraeinheit zwischen der Ruhestellung und der Bilderfassungsstellung in einem im Wesentlichen gleichbleibenden Abstand zu einer Innenseite des Bewegungskanals angeordnet. In diesem Bewegungskanal wird somit die Kameraeinheit quasi parallel zu den Innenseiten des Bewegungskanals durchgeführt. Zweckmäßigerweise kann in diesem Bewegungskanal auch das borstenartige Dichtungselement angeordnet sein, welches den vorderseitigen Spalt zur vorderseitigen Öffnung vollständig abdichtet. Der Bewegungskanal endet idealerweise mit der vorderseitigen Öffnung bzw. bildet genau diese vorderseitige Öffnung. Durch den Einsatz des Bewegungskanals kann erreicht werden, dass die Borsten des borstenartigen Dichtungselements quasi nicht gestaucht werden, da eben ein gleichbleibender Abstand zwischen Kameraeinheit und dem Bewegungskanal vorhanden ist.

Im Rahmen der Erfindung ist es ferner denkbar, dass das borstenartige Dichtungselement an der Kameraeinheit befestigt ist und die einzelnen Borsten mit ihren freien Enden mit dem Trägerelement oder den Innenseiten des Bewegungskanals zusammenwirken. Somit ist auch ein leichter Austausch des borstenartigen Dichtungselements möglich, der nämlich direkt dann vorgenommen werden kann, wenn die Kameraeinheit aus der übrigen Vorrichtung entfernt wird. In diesem Fall kann auch dann das borstenartige Dichtungselement einfach ausgetauscht oder gereinigt werden. Allerdings ist es im Rahmen der Erfindung auch denkbar, dass das borstenartige Dichtungselement fest an dem Trägerelement oder einer Innenseite des Bewegungskanals angeordnet ist und mit den freien Enden mit der Kameraeinheit zusammenwirkt. Folglich handelt es sich hierbei um eine kinematische Umkehr der zuvor beschriebenen Anordnung des borstenartigen Dichtungselements. Idealerweise ist bei der zweiten Anordnung des borstenartigen Dichtungselements an dem Trägerelement oder der Innenseite des Bewegungskanals dieses im Bereich der vorderseitigen Öffnung angeordnet, damit ebenfalls ein einfacher Austausch ermöglicht wird.

Auch ist es bei der erfindungsgemäßen Vorrichtung möglich, dass das Dichtungselement balgenartig aufgebaut ist. Hierbei kann zumindest ein Federelement im balgenartigen Dichtungselement derart angeordnet sein, dass das balgenartige Dichtungselement in dem vorderen Spalt nachgiebig eingespannt ist und diesen abdichtet. Somit ist quasi das balgenartige Dichtungselement über das Federelement gestülpt und dichtet den vorderseitigen Spalt ab. Auch kann das balgenartige Dichtungselement direkt oder indirekt über Haltemittel an der Kameraeinheit oder dem Trägerelement angeordnet bzw. befestigt sein.

Ferner ist es im Rahmen der Erfindung denkbar, dass das balgenartige Dichtungselement am Trägerelement angeordnet ist und die Federelemente das balgenartige Dichtungselement, insbesondere in einer gummiartigen Umhüllung, an die Kameraeinheit pressen. Auch ist eine kinematische Umkehr der Befestigung des balgenartigen Dichtungselements denkbar, da dieses auch an der Kameraeinheit direkt oder indirekt befestigt werden kann und direkt oder indirekt mit dem Trägerelement zusammenwirkt. Auch bei dieser Weiterbildung der Erfindung kann der bereits erwähnte Bewegungskanal für die Kameraeinheit vorgesehen sein.

Um die Vorrichtung in ihrer Ruhestellung zusätzlich vor dem Eindringen von Verschmutzungen zu schützen, kann es vorgesehen sein, dass vor der vorderseitigen Öffnung des Trägerelements ein Deckelelement angeordnet ist, welches die vorderseitige Öffnung zumindest in der Ruhestellung der Kameraeinheit verschließt. Dieses Deckelelement kann über ein Dreh- oder ein Schwenkgelenk mit der Vorrichtung, insbesondere dem Trägerelement befestigt sein. Idealerweise wird das Deckelelement automatisch bei einer Verstellung der Kameraeinheit von der Ruhestellung in die Bilderfassungsstellung geöffnet. Ebenfalls ist es zweckmäßig, dass das Deckelelement automatisch die vorderseitige Öffnung verschließt, wenn die Kameraeinheit von der Bilderfassungsstellung in die Ruhestellung überführt wird. Zu diesem Zweck kann z. B. ein Übertragungsmittel zwischen der Kameraeinheit und dem Deckelelement vorgesehen sein. Zusätzlich kann zwischen dem Deckelelement und der weiteren Vorrichtung ein zweites Dichtungsmittel, insbesondere in Form eines Dichtungsringes, angeordnet sein.

Des Weiteren ist es denkbar, dass der Antriebsmechanismus und/oder das zuvor erwähnte Deckelelement durch zumindest einen Antrieb, insbesondere in Form eines Elektromotors, hin und her bewegt werden kann. Dieser Antrieb kann innerhalb der erfindungsgemäßen Vorrichtung angeordnet sein oder in einem rückseitigen Bereich der Vorrichtung vorgesehen sein. Hierbei ist es zweckmäßig wenn der Antrieb über das Übertragungselement mit dem Antriebsmechanismus und/oder der Kameraeinheit sowie ggf. dem Deckelelement mechanisch zusammenwirkt.

Ferner ist es bei der erfindungsgemäßen Vorrichtung denkbar, dass das Trägerelement zumindest teilweise als Gehäuse oder in einem Gehäuse ausgestaltet ist. Hierbei kann in einem hinteren Bereich des Gehäuses zumindest eine Gehäuseöffnung, insbesondere als Belüftungsöffnung, vorgesehen sein. Auch kann eine weitere Gehäuseöffnung z. B. als Entwässerungsöffnung vorgesehen sein, falls trotz der vorgeschlagenen Abdichtungsmaßnahmen Feuchtigkeit in die erfindungsgemäße Vorrichtung, z. B. durch den rückwärtigen Bereich, eingedrungen ist.

Wie bereits erwähnt worden ist, ist die Erfindung auch auf das Verfahren nach dem Anspruch 15 gerichtet. Hierbei ist es erfindungsgemäß vorgesehen, dass die Kameraeinheit zum vorderseitigen Spalt permanent abgedichtet zwischen der Ruhestellung und der Bilderfassungsstellung hin und her bewegt wird.

Erfindungsgemäß können die Merkmale der Beschreibung und der Ansprüche und der erfindungsgemäßen Vorrichtung sowie des erfindungsgemäßen Verfahrens sowohl einzeln für sich als auch in den verschiedensten Kombinationen erfindungswesentlich sein. Weitere, die Erfindung verbessernde Maßnahmen werden nachstehend gemeinsam mit der Beschreibung der bevorzugten Ausführungsbeispiele der Erfindung anhand der Figuren näher dargestellt. Es zeigen:
- Figur 1a: ein schematischer Längsschnitt durch die erfindungsgemäße Vorrichtung in einer Ruhestellung der Kameraeinheit,
- Figur 1b: ein vergleichbarer Querschnitt durch die erfindungsgemäße Vorrichtung in einer Bilderfassungsstellung der Kameraeinheit, wobei wesentliche Merkmale der Vorrichtung ausgeblendet sind,
- Figur 2: eine Frontansicht auf die erfindungsgemäße Vorrichtung mit der vorderseitigen Öffnung und dem vorderseitigen Spalt zwischen dem Trägerelement und der Kameraeinheit,
- Figur 3a: eine dreidimensionale Ansicht eines erfindungsgemäßen Dichtungselements, welches als Schutzmembran ausgebildet ist,
- Figur 3b: ein Längsschnitt durch das Dichtungselement aus Figur 3a,
- Figur 4: ein schematischer Längsschnitt durch eine weitere erfindungsgemäße Vorrichtung mit einem borstenartigen Dichtungselement,
- Figur 5a: ein schematischer Längsschnitt durch eine andere erfindungsgemäße Vorrichtung mit einem federnden Dichtungselement, welches eine gummiartige Umhüllung aufweist und
- Figur 5b: ein detaillierter Längsschnitt durch das entsprechende Dichtungselement auf Figur 5a.

In den Figuren werden für die gleichen technischen Merkmale auch für unterschiedliche Ausführungsbeispiele die identischen Bezugszeichen verwendet.

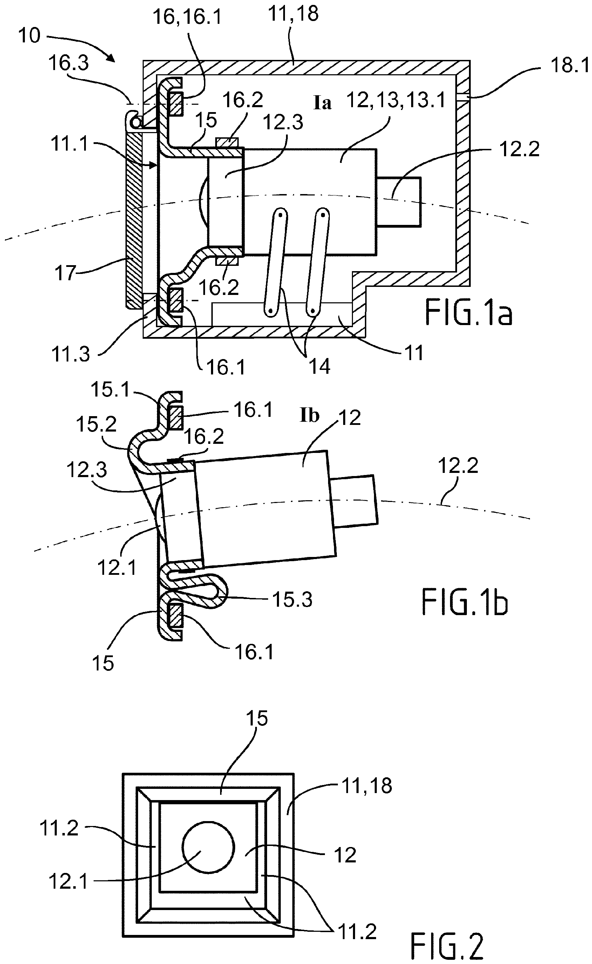

In der Figur 1a ist ein schematischer Längsschnitt durch die erfindungsgemäße Vorrichtung 10 in einer Ruhestellung 1a einer Kameraeinheit 12 dargestellt. In dieser Ruhestellung Ia ist die Kameraeinheit 12 vollständig hinter einer vorderseitigen Öffnung 11.1 von einem Trägerelement 11 angeordnet. Das Trägerelement 11 ist im vorliegenden Fall als Gehäuse 18 ausgestaltet und schützt auch die Kameraeinheit 12 weitestgehend rückseitig gegen Verschmutzungen. Um Druckveränderungen durch eine Bewegung der Kameraeinheit 12 innerhalb des Gehäuses 18 zu vermeiden, ist bspw. eine Gehäuseöffnung 18.1, insbesondere als Lüftungsöffnung vorgesehen. Damit die Kameraeinheit 12 von ihrer dargestellten Ruhestellung Ia (s. Figur 1a) in die Bilderfassungsstellung Ib überführt werden kann, ist ein Antriebsmechanismus 14 vorgesehen, der im vorliegenden Fall zwei parallele und drehbare gelagerte Hebel aufweist. Dieser Antriebsmechanismus 14 kann direkt an dem Trägerelement 11 angeordnet sein oder z. B. direkt an einem Antrieb, der jedoch nicht dargestellt ist. Durch die Drehung der beiden parallelen Hebel des Antriebsmechanismus 14 wird die Kameraeinheit 12 von der Ruhestellung Ia entlang der bogenförmigen Führungslinie 12.2 in die Bilderfassungsstellung Ib überführt.

Die Kameraeinheit 12 ist selbst an einem Schlitten 13 angeordnet, der einen Adapter 13.1 zur Befestigung der Kameraeinheit 12 aufweist. Durch diesen Adapter 13.1 können auch unterschiedliche Modelle von Kameraeinheiten 12 bei der erfindungsgemäßen Vorrichtung 10 unproblematisch eingesetzt werden. Durch den Adapter 13.1 wird die Kameraeinheit 12 in der Regel formschlüssig und/oder kraftschlüssig mit dem Schlitten 13 verbunden. Wie aus der Figur 1a gut zu erkennen ist, greift der Antriebsmechanismus 14 an den Schlitten 13 an, um somit die Kameraeinheit 12 indirekt bewegen zu können. Die Führungslinie 12.2 der Kameraeinheit ist strichpunktiert in der Figur 1a und 1b dargestellt. Auf dieser Führungslinie 12.2 bewegt sich die Kameraeinheit 12 von ihrer Ruhestellung Ia in die Bilderfassungsstellung Ib und umgekehrt.

Zum zusätzlichen Schutz der erfindungsgemäßen Vorrichtung 10 ist ein Deckelelement 17 vor der vorderseitigen Öffnung 11.1 des Trägerelements 11 vorgesehen. Dieses Deckelelement 17 wird über ein nicht dargestelltes Übertragungselement geöffnet oder geschlossen. Dieses Übertragungselement kann z. B. mit der Kameraeinheit 12 direkt oder indirekt verbunden sein oder mit dem Antriebsmechanismus 14 oder einem Antrieb. In der Bilderfassungsstellung Ib ist das Deckelelement 17 zumindest soweit geöffnet, dass die Kameraeinheit 12 ohne Einschränkungen mit der Bilderfassung beginnen kann. In der Figur 1a ist das Deckelelement 17 über ein Drehgelenk mit einer festen Drehachse an dem Trägerelement 11 befestigt.

Um nun bei der erfindungsgemäßen Vorrichtung 10 eine Abdichtung der vorderseitigen Öffnung 11.1 vorzunehmen, ist ein Dichtungselement 15 vorgesehen. Diese Dichtungselement 15 weist in der Figur 1a eine Schutzmembran 15.1 auf, die flexibel und insbesondere gummiartig ausgestaltet ist. Damit das Dichtungselement 15 einerseits an dem Trägerelement 11 und andererseits an der Kameraeinheit 12 angeordnet werden kann, sind zusätzliche Haltemittel 16 denkbar. In der Figur 1a ist das Haltemittel 16 zur Befestigung an dem Trägerelement 11 als Stützelement 16.1, insbesondere Stützrahmen 16.1, ausgestaltet. Hierbei ist das Dichtungselement 15 mit einem Flansch 15.4 zwischen dem Trägerelement 11, insbesondere einem dafür vorgesehenen Befestigungsflansch 11.3 und dem Stützelement 16.1, insbesondere in Form eines Stützrahmens, durch beispielsweise Fixiermittel 16.3 in Form von Schrauben befestigt. Des Weiteren ist das Dichtungselement 15 mit seinem Flansch 15.5 an der Kameraeinheit 12, insbesondere dem dafür vorgesehenen Befestigungsflansch 12.3 befestigt. Hierbei kann ebenfalls ein Haltemittel 16 zum Einsatz kommen, welches in der Figur 1a und 1b als Spannring 16.2 oder Spanndraht dargestellt ist. Bei beiden Flanschen 15.4 und 15.5 des Dichtungselements 15 ist das Dichtungselement 15 zwischen den Haltemitteln 16 und der Kameraeinheit 12 einerseits bzw. des Trägerelements 11 andererseits eingeklemmt. Das stützrahmenförmige Stützelement 16.1 für das Trägerelement 11 kann zusätzlich durch Fixierungsmittel 16.3, insbesondere in Form von Schrauben, Nieten oder dergleichen, mit dem Trägerelement 11 befestigt werden. Der Spannring oder Spanndraht 16.2 presst den Flansch 15.5 vom Dichtungselement 15 an den Befestigungsflansch 12.3 der Kameraeinheit 12. Somit ist sichergestellt, dass durch das vorliegende Dichtungselement 15 die vorderseitige Öffnung 11.1 des Trägerelements 11 in jeder Stellung der Kameraeinheit 12 vollständig abgedichtet ist.

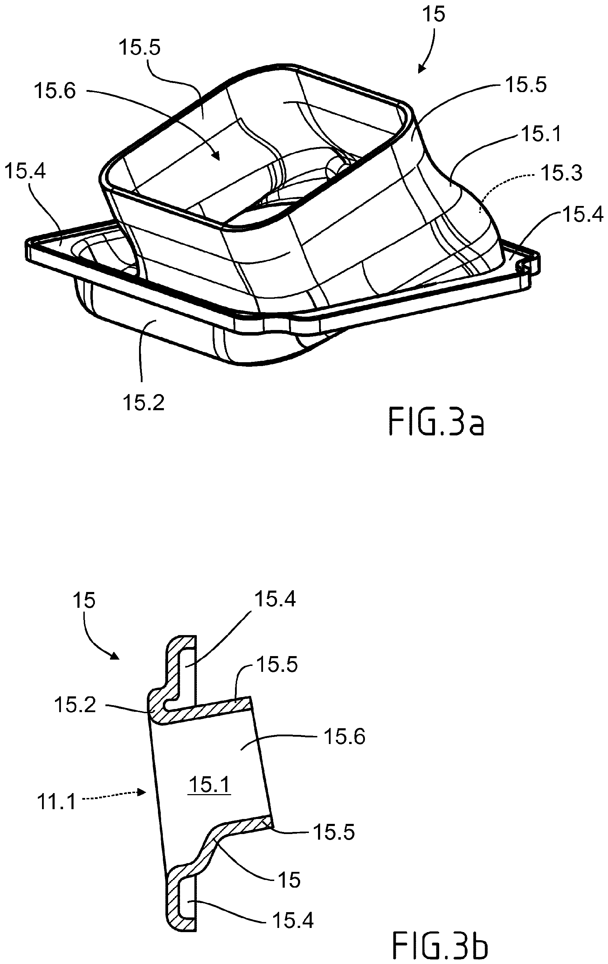

In der weiteren Figur 1b ist ein vergleichbarer Längsschnitt durch die erfindungsgemäße Vorrichtung 10 in der Bilderfassungsstellung Ib der Kameraeinheit 12 dargestellt. Hierbei sind weitere technische Merkmale, insbesondere das Trägerelement 11 sowie der Antriebsmechanismus 14 bewusst ausgeblendet. In dieser Bilderfassungsstellung Ib ragt die Kameraeinheit 12 zumindest teilweise durch die vorderseitige Öffnung 11.1 im Trägerelement 11. Somit kann die Kameraeinheit 12 mit ihrem Objektiv 12.1 vollständig die gewünschten Bilder erfassen. Aus der Figur 1b wird auch deutlich, wie sich die Form des Dichtungselements 15 zwischen der Ruhestellung Ia und der Bilderfassungsstellung Ib verändert. Hierzu ist es ausreichend, dass das Dichtungselement 15 verformbar, nicht jedoch zwangsläufig elastisch ausgestaltet sein muss. Gerade im unteren Bereich des Dichtungselements 15 bildet sich eine bewusste Faltung 15.3 aus, da sich der Befestigungsflansch 12.3 der Kameraeinheit 12 in der Bilderfassungsstellung Ib dem Befestigungsflansch 11.3 am Trägerelement 11 deutlich nähert. Zu diesem Zweck kann das Dichtungselement 15 speziell ausgeformt sein, was aus den beiden Figuren 3a und 3b noch näher hervorgeht.

In der Figur 2 ist eine Frontansicht auf die erfindungsgemäße Vorrichtung 10 mit der vorderseitigen Öffnung 11.1 und dem vorderseitigen Spalt 11.2 zwischen dem Trägerelement 11 und der Kameraeinheit 12 dargestellt. Wie aus der Figur 2 weiter zu erkennen ist, muss nicht unbedingt der Abstand des vorderseitigen Spalts 11.2 zwischen der vorderseitigen Öffnung 11.1 vom Trägerelement 11 und der Kameraeinheit 12 zu allen Seiten gleich groß ausgestaltet sein. Auch ist die vorliegende Erfindung nicht auf eine rechteckartige ausgestaltete vorderseitige Öffnung 11.1 beschränkt. Auch das Gehäuse der Kameraeinheit 12 muss nicht unbedingt rechteckartig sein, sondern kann auch rund oder andersartig ausgestaltet sein. Allerdings empfiehlt es sich dann, auch die Form des Dichtungselements 15 an die geometrische Ausgestaltung der vorderseitigen Öffnung 11.1 einerseits und an die geometrische Ausgestaltung der Kameraeinheit 12 andererseits anzupassen.

In der Figur 3a und 3b ist nur das Dichtungselement 15 dargestellt. Dieses Dichtungselement 15 weist eine Schutzmembran 15.1 auf, die insbesondere gummiartig ausgestaltet sein kann. In der Figur 3a ist eine dreidimensionale Ansicht des Dichtungselements 15 dargestellt, die im Wesentlichen der Bilderfassungsstellung Ib von der Kameraeinheit 12 entspricht. Deutlich sind in der Figur 3a die beiden Flansche 15.4 und 15.5 für das Trägerelement 11 und die Kameraeinheit 12 zu erkennen. Dabei weist das Dichtungselement 15 nur eine Öffnung 15.6 auf, wodurch die Kameraeinheit 12, insbesondere mit ihrem Befestigungsflansch 12.3 durchgeführt und befestigt wird. Der Querschnitt des Flansches 15.5 ist im Wesentlichen rechteckförmig mit abgerundeten Ecken und entspricht somit dem äußeren Umfang des Befestigungsflansches 12.3 der Kameraeinheit 12. Dieser Befestigungsflansch 15.5 des Dichtungselements 15 liegt flach an dem Befestigungsflansch 12.3 auf. Um das Dichtungselement 15 sicher an der Kameraeinheit 12 zu fixieren, kann zusätzlich ein Halteelement 16, in Form eines Spannrings 16.2 (s. Figuren 1a und 1b), vorgesehen sein. Allerdings ist es auch denkbar, dass das Dichtungselement 15 im Bereich des Flansches 15.5 soweit elastisch dehnbar ist, dass sich der Flansch 15.5 selber abdichtend an den Befestigungsflansch 12.3 der Kameraeinheit 12 anlegt. Im Bereich des Flansches 15.4 ist zusätzlich eine umlaufende Aufkantung vorgesehen, die zur Aufnahme und Positionierung des Haltemittels 16, insbesondere in Form eines Stützrahmens 16.1 zur Befestigung an dem Trägerelement 11 dient. Das Dichtungselement 15 weist zwischen den beiden Flanschen 15.4 und 15.5 Dehnungsmittel 15.2 und Faltungen 15.3 auf, um möglichst eine elastische Verformung des Dichtungselements 15 durch die Bewegung von der Ruhestellung Ia in die Bilderfassungsstellung Ib zu vermeiden. Wie bereits erwähnt worden ist, kann das Dichtungselement 15 auch gewebe- oder stoffartig ausgestaltet sein, wobei es sich auch um eine semipermeable Schutzmembran 15.1 handeln kann.

Zur besseren Verdeutlichung ist in der Figur 3b ein Längsschnitt durch das Dichtungselement 15 aus Figur 3a dargestellt. Dabei wird auch die umlaufende Aufkantung für die Positionierung des stützrahmenförmigen Haltemittels 16 im Bereich es Flansches 15.4 des Dichtungselements 15 deutlich sichtbar. Auch das obere Dehnungsmittel 15.2 sowie die untere Faltung 15.3 sind gut erkennbar.

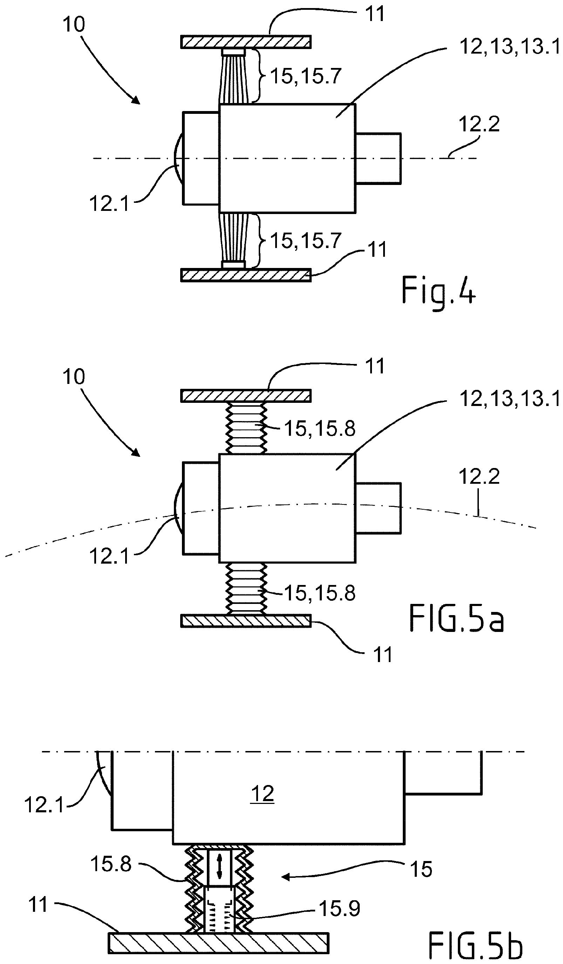

In den weiteren Figuren 4 und 5a, 5b sind weitere Ausgestaltungen der erfindungsgemäßen Vorrichtung 10 bzw. der entsprechenden Abdichtungen dargestellt. In der Figur 4 kommt ein borstenartig ausgestaltetes Dichtungselement 15.7 zum Einsatz. Dabei sind die Borsten 15.7 in dem vorderseitigen Spalt 11.2 zwischen dem Trägerelement 11 und der Kameraeinheit 12 angeordnet und dichten somit diesen Spalt 11.2 ab. Aufgrund der Flexibilität der Borsten 15.7 kann die Kameraeinheit 12 entlang der (geradlinigen) Führungslinie 12.2 hin und her bewegt werden, wobei die Borsten mit ihren freien Enden an der Außenseite der Kameraeinheit 12 entlang gleiten. Hierdurch ist ebenfalls eine sichere Abdichtung des vorderen Spalts 11.2 gesichert. In der Figur 4 ist der Fall dargestellt, dass das borstenseitige Dichtungselement 15 nur an dem Trägerelement 11 befestigt ist. Allerdings ist es auch denkbar, dass das borstenartige Dichtungselement 15.7 nur an der Kameraeinheit 12, insbesondere dem Befestigungsflansch 12.3 oder dem Schlitten 13 angeordnet ist und die Borsten mit ihren freien Enden mit dem vorderseitigen Spalt 11.2 des Trägerelements 11 zusammenwirken.

In der Figur 5a und 5b kommt ein balgenartiges Dichtungselement 15.8 zum Einsatz, um den vorderseitigen Spalt 11.2 abzudichten. Ein konkreter Aufbau des entsprechenden Dichtungselements 15 ist in der Figur 5b im Detail dargestellt. Der Vorteil bei dem balgenartigen Dichtungselement 15.8 gegenüber dem borstenartigen Dichtungselement 15.7 aus Figur 4 ist, dass sich auch die Größe des Spalts 11.2 (punktuell) verändern kann, da sich die Länge bzw. Höhe des balgenartigen Dichtungselements 15.8 ebenfalls (punktuell) verändern kann. Aus diesem Grund kann die Kameraeinheit 12 auch einer bogenförmigen Führungslinie 12.2 folgen ohne dass es zu einer Undichtigkeit im vorderseitigen Spalt 11.2 kommt, da sich das balgenartige Dichtungselement 15.8 der jeweiligen Größe des vorderseitigen Spalts 11.2 nachgiebig anpasst.

Wie in Figur 5b zu erkennen ist, weist das balgenartige Dichtungselement 15.8 eine insbesondere gummiartige Umhüllung auf, wobei innerhalb der Umhüllung ein längsverschiebliches Federelement 15.9 angeordnet ist. Dieses Federelement 15.9 presst die Umhüllung an die Außenfläche der Kameraeinheit 12 abdichtend an. In dem vorliegenden Ausführungsbeispiel aus Figur 5b ist das Dichtungselement 15.8 an dem Trägerelement 11 befestigt und gleitet an seinem freien Ende an der Außenseite der Kameraeinheit 12 entlang. Selbstverständlich ist auch hier eine kinematische Umkehr denkbar, so dass das entsprechende Dichtungselement 15.8 an der Kameraeinheit 12 angeordnet ist, insbesondere an dem Befestigungsflansch 12.3, und mit seinem freien Ende mit dem Trägerelement 11, insbesondere dem vorderseitigen Spalt 11.2, zusammenwirkt.

### Bezugszeichenliste

- 10: Vorrichtung
- 11: Trägerelement
- 11.1: vorderseitige Öffnung
- 11.2: vorderseitiger Spalt
- 11.3: Befestigungsflansch
- 12: Kameraeinheit
- 12.1: Objektiv
- 12.2: Führungslinie
- 12.3: Befestigungsflansch
- 13: Schlitten
- 13.1: Adapter für 12
- 14: Antriebsmechanismus
- 15: Dichtungselement
- 15.1: Schutzmembran, insbesondere gummiartig
- 15.2: Dehnungsmittel
- 15.3: Faltung
- 15.4: Flansch für 11.3
- 15.5: Flansch für 12.3
- 15.6: Öffnung für 12
- 15.7: borstenartiges Dichtungselement, insbesondere mit Borsten
- 15.8: balgenartiges Dichtungselement mit insbesondere gummiartiger Umhüllung
- 15.9: Federelement
- 16: Haltemittel
- 16.1: Stützelement, insbesondere Stützrahmen
- 16.2: Spannring oder Spanndraht
- 16.3: Fixiermittel, insbesondere Schraube, Niet oder dergleichen
- 17: Deckelelement
- 18: Gehäuse
- 18.1: Gehäuseöffnung, insbesondere Belüftungsöffnung

- Ia: Ruhestellung
- Ib: Bilderfassungsstellung

## Patentansprüche

1. Vorrichtung (10) mit einem Trägerelement (11), an dem eine Kameraeinheit (12), die zur Bilderfassung des Außenbereiches eines Kraftfahrzeugs dient, angeordnet ist, und
mit zumindest einem Antriebsmechanismus (14) für die Kameraeinheit (12), der dazu dient, die Kameraeinheit (12) zwischen einer Ruhestellung (la) und einer Bilderfassungsstellung (Ib) hin und her zu bewegen,
wobei der Antriebsmechanismus (14) am Trägerelement (11) angeordnet ist, um die Kameraeinheit (12) bewegbar zu halten, und
wobei das Trägerelement (11) eine vorderseitige Öffnung (11.1) aufweist, durch die zumindest in der Bilderfassungsstellung (Ib) für die Kameraeinheit (12) Bilder erfassbar sind, und
mit zumindest einem vorderseitigen Spalt (11.2) zwischen der vorderseitigen Öffnung (11.1) im Trägerelement (11) und der Kameraeinheit (12), um die Kameraeinheit (12) in die Bilderfassungsstellung (Ib) überführen zu können,
**dadurch gekennzeichnet,**
**dass** der vorderseitige Spalt (11.2) durch ein Dichtungselement (15) verschließbar ist, wobei das Dichtungselement (15) den vorderseitigen Spalt zwischen der gesamten Hin-und Her-Bewegung der Kameraeinheit (12) zwischen der Ruhestellung (la) und der Bilderfassungsstellung (Ib) abdichtet.

2. Vorrichtung (10) nach Anspruch 1,
**dadurch gekennzeichnet,**
**dass** das Dichtungselement (15) einerseits am Trägerelement (11) und andererseits an der Kameraeinheit (12) befestigt ist, wobei insbesondere das Dichtungselement (15) am Trägerelement (11) im Bereich des vorderseitigen Spalts (11.2) und an der Kameraeinheit (12) im vorderen Bereich befestigt ist.

3. Vorrichtung (10) nach Anspruch 1 oder 2,
**dadurch gekennzeichnet,**
**dass** am Trägerelement (11) und/oder an der Kameraeinheit (12) ein Befestigungsflansch (11.3, 12.3) für das Dichtungselement (15) vorgesehen ist, wobei insbesondere der Befestigungsflansch (11.3, 12.3) als bereichsweise ebene Fläche, als Nut und/oder Ausbuchtung ausgestaltet ist.

4. Vorrichtung (10) nach einem der vorhergehenden Ansprüche,
**dadurch gekennzeichnet,**
**dass** das Dichtungselement (15) über Haltemittel (16) am Trägerelement (11) und/oder an der Kameraeinheit (12) befestigbar ist, wobei insbesondere der Befestigungsflansch (11.3, 12.3) zur Befestigung durch die Haltemittel (16) dient.

5. Vorrichtung (10) nach einem der vorhergehenden Ansprüche,
**dadurch gekennzeichnet,**
**dass** das Haltemittel (16) am Trägerelement (11) ein Stützelement (16.1), insbesondere in Form eines Stützrahmens, aufweist und das Dichtungselement (15) zwischen Trägerelement (11) und Stützrahmen (16.1) eingeklemmt ist
und/oder dass das Haltemittel (16) an der Kameraeinheit (12) als Spannelement (16.2), insbesondere als Spannring oder Spanndraht, ausgestaltet ist.

6. Vorrichtung (10) nach einem der vorhergehenden Ansprüche,
**dadurch gekennzeichnet,**
**dass** das Dichtungselement (15) eine Schutzmembran aufweist, die insbesondere hochflexibel ist und eine vorgeformte Grundform aufweist
und/oder dass das Dichtungselement (15), insbesondere in Form der Schutzmembran (15.1), zumindest ein Dehnungsmittel (15.2) aufweist.

7. Vorrichtung (10) nach einem der vorhergehenden Ansprüche,
**dadurch gekennzeichnet,**
**dass** das Dichtungselement (15) borstenartig (15.7) ausgestaltet ist und die einzelnen Borsten den vorderseitigen Spalt (11.2) vollständig verschließen.

8. Vorrichtung (10) nach einem der vorhergehenden Ansprüche,
**dadurch gekennzeichnet,**
**dass** das Trägerelement (11) einen Bewegungskanal für die Kameraeinheit (12) aufweist, in den die Kameraeinheit (12) aufgenommen ist, und die Kameraeinheit (12) zwischen der Ruhestellung (la) und der Bilderfassungsstellung (Ib) einen im Wesentlichen gleichbleibenden Abstand zu einer Innenseiten des Bewegungskanals aufweist.

9. Vorrichtung (10) nach einem der vorhergehenden Ansprüche,
**dadurch gekennzeichnet,**
**dass** das borstenartige Dichtungselement (15) an der Kameraeinheit (12) angeordnet ist und die einzelnen Borsten mit ihren freien Enden mit den Innenseiten des Bewegungskanals zusammenwirken.

10. Vorrichtung (10) nach einem der vorhergehenden Ansprüche,
**dadurch gekennzeichnet,**
**dass** das borstenartige Dichtungselement (15) am Trägerelement (11) angeordnet ist und mit ihren freien Enden mit der Kameraeinheit (12) zusammenwirkt.

11. Vorrichtung (10) nach einem der vorhergehenden Ansprüche,
**dadurch gekennzeichnet,**
**dass** das Dichtungselement (15) balgenartig aufgebaut ist und zumindest ein Federelement (15.9) im balgenartigen Dichtungselement (15) derart angeordnet ist, dass das balgenartige Dichtungselement (15) in dem vorderseitigen Spalt (11.2) nachgiebig eingespannt ist und diesen abdichtet.

12. Vorrichtung (10) nach einem der vorhergehenden Ansprüche,
**dadurch gekennzeichnet,**
**dass** das balgenartige Dichtungselement (15) mit den Federelementen (15.9) am Trägerelement (11) angeordnet ist und die Federelemente (15.9) das balgenartige Dichtungselement (15), insbesondere eine gummiartige Umhüllung (15.8), an die Kameraeinheit (12) pressen.

13. Vorrichtung (10) nach einem der vorhergehenden Ansprüche,
**dadurch gekennzeichnet,**
**dass** vor der vorderseitigen Öffnung (11.1) des Trägerelements (11) ein Deckelelement (17) angeordnet ist, welches die vorderseitige Öffnung (11.1) zumindest in der Ruhestellung (la) der Kameraeinheit (12) verschließt.

14. Vorrichtung (10) nach einem der vorhergehenden Ansprüche,
**dadurch gekennzeichnet,**
**dass** das Trägerelement (11) zumindest teilweise als Gehäuse oder in einem Gehäuse ausgestaltet ist, wobei insbesondere in einem hinteren Bereich des Gehäuses eine Gehäuseöffnung (18.1) als Belüftungsöffnung vorgesehen ist.

15. Verfahren zur Betätigung einer Vorrichtung (10) mit einem Trägerelement (11), an dem eine Kameraeinheit (12), die zur Bilderfassung des Außenbereiches eines Kraftfahrzeugs dient, angeordnet ist, und
mit zumindest einem Antriebsmechanismus (14) für die Kameraeinheit (12), der dazu dient, die Kameraeinheit (12) zwischen einer Ruhestellung (la) und einer Bilderfassungsstellung (Ib) hin und her zu bewegen,
wobei der Antriebsmechanismus (14) am Trägerelement (11) angeordnet ist, um die Kameraeinheit (12) bewegbar zu halten, und
wobei das Trägerelement (11) eine vorderseitige Öffnung (11.1) mit einem vorderseitigen Spalt (11.2) aufweist, durch die zumindest in der Bilderfassungsstellung (Ib) für die Kameraeinheit (12) Bilder erfassbar sind, und
mit zumindest einem vorderseitigen Spalt (11.2) zwischen der vorderseitigen Öffnung (11.1) im Trägerelement (11) und der Kameraeinheit (12), um die Kameraeinheit (12) in die Bilderfassungsstellung (Ib) überführen zu können,
**dadurch gekennzeichnet, dass**
die Kameraeinheit (12) zum vorderseitigen Spalt (11.2) permanent abgedichtet zwischen Ruhestellung (la) und Bilderfassungsstellung (Ib) hin- und her bewegt wird.

## Claims

1. Device (10) with a carrier element (11), on which a camera unit (12) is assembled, which serves for the image acquisition of the outer area of a vehicle, and
with at least a drive mechanism (14) for the camera unit (12), which serves for moving the camera (12) back and forth between a rest position (Ia) and an image acquisition position (Ib),
wherein the drive mechanism (14) is assembled at the carrier element (11) in order to keep the camera unit (12) movable, and
wherein the carrier element (11) comprises an opening (11.1) at the front side, through which at least in the image acquisition position (Ib) images are recordable for the camera unit (12) and with at least a gap (11.2) at the front side between the opening (11.1) at the front side in the carrier element (11) and the camera unit (12) in order to transfer the camera unit (12) into the image acquisition position (lb),
**characterized in that**
the gap (11.2) at the front side is closable through a sealing element (15)
wherein the sealing element (15) seals the gap (11.2) at the front side during the whole back and forth movement of a camera unit (12) between the rest position (Ia) and an image acquisition position (lb).

2. Device (10) according to claim 1,
**characterized in that**
the sealing element (15) is on the one hand assembled at the carrier element (11) and on the other hand at the camera unit (12) wherein particularly the sealing element (15) is assembled at the carrier element (11) in the area of the gap (11.2) at the front side and at the camera unit (12) in the frontal area.

3. Device (10) according to claim 1 or 2,
**characterized in that**
at the carrier element (11) and/or at the camera unit (12) an assembly flange (11.3, 12.3) for the sealing element (15) is intended, wherein particularly the assembly flange (11.3, 12.3) is configured as a section-wise plane area, as a notch and/or recess.

4. Device (10) according to one of the preceding claims,
**characterized in that**
the sealing element (15) can be assembled via resting means (16) at the carrier element (11) and/or at the camera unit (12) wherein particularly the assembly flange (11.3, 12.3) serves for the assembly by the resting means (16).

5. Device (10) according to one of the preceding claims,
**characterized in that**
the resting means (16) comprise a support element (16.1) at the carrier element (11), particularly in form of a support frame and the sealing element (15) is clamped between the carrier element (11) and the support frame (16.1), and/or that the resting means (16) is configured as a clamping element (16.2) at the camera unit (12), particularly as a clamping ring or clamping wire.

6. Device (10) according to one of the preceding claims,
**characterized in that**
the sealing element (15) comprises a protection membrane which is highly flexible and comprises a pre-formed basic form, and/or that the sealing element (15), particularly in form of the protection membrane (15.1) comprises at least one extension means (15.2).

7. Device (10) according to one of the preceding claims,
**characterized in that**
the sealing element (15) is configured bristle-like (15.7) and the single bristles completely close the gap (11.2) at the front side.

8. Device (10) according to one of the preceding claims,
**characterized in that**
the carrier element (11) comprises a movement passage for the camera unit (12) in which the camera unit (12) is received and the camera unit (12) comprises a mainly constant distance to the inner wall of the movement passage between the rest position (Ia) and the image acquisition position (lb).

9. Device (10) according to one of the preceding claims,
**characterized in that**
the bristle-like sealing element (15) is assembled at the camera unit (12) and the single bristles interact with their free edges with the inner wall of the movement passage.

10. Device (10) according to one of the preceding claims,
**characterized in that**
the bristle-like sealing element (15) is assembled at the carrier element (11) and with its free edges interacts with the camera unit (12).

11. Device (10) according to one of the preceding claims,
**characterized in that**
the sealing element (15) is configured bellow-like and at least one spring element (15.2) is assembled within the bellow-like sealing element (15) in a way that the bellow-like sealing element (15) is flexibly clamped in the gap (11.2) at the front side and seals the same.

12. Device (10) according to one of the preceding claims,
**characterized in that**
the bellow-like sealing element (15) is assembled with the spring elements (15.9) at the carrier element (11) and the spring elements (15.9) press the bellow-like sealing element (15), particularly a rubber-like cover (15.8), to the camera unit (12).

13. Device (10) according to one of the preceding claims,
**characterized in that**
in front of the opening (11.1) of the front side of the carrier element (11) a lid element (17) is assembled, which at least in the rest position (Ia) of the camera unit (12) closes the opening (11.1) at the front side.

14. Device (10) according to one of the preceding claims,
**characterized in that**
the carrier element (11) is at least partially configured as a housing or in a housing, wherein particularly in a rear area of the housing a housing opening (18.1) is intended as a ventilation opening.

15. Method for the actuation of a device (10) with a carrier element (11) at which a camera unit (12) is assembled which serves for the image acquisition of the outer area of a vehicle, and with at least one drive mechanism (14) for the camera unit (12) which serves for moving the camera unit (12) back and forth between a rest position (Ia) and an image acquisition position (lb),
wherein the drive mechanism (14) is assembled at the carrier element (11) in order to keep the camera unit (12) movable, and
wherein the carrier element (11) comprises an opening (11.1) at the front side with a gap (11.2) at the front side through which at least in the image acquisition position (Ib) images are recordable for the camera unit (12) and
with at least a gap (11.2) at the front side between the opening (11.1) at the front side in the carrier element (11) and the camera unit (12) in order to transfer the camera unit (12) into the image acquisition position (lb),
**characterized in that**
the camera unit (12) is moved back and forth between the rest position (Ia) and the image acquisition position (lb) permanently sealed to the gap (11.2) at the front side.

## Revendications

1. Dispositif (10) avec un élément porteur (11), sur lequel est disposée une unité caméra (12) qui sert à la prise d'images de la zone extérieure d'un véhicule automobile,
et avec au moins un mécanisme d'entraînement (14) pour l'unité caméra (12), qui sert à déplacer en va-et-vient l'unité caméra (12) entre une position de repos (la) et une position (Ib) de prise d'images,
sachant que le mécanisme d'entraînement (14) est disposé sur l'élément porteur (11), afin de maintenir l'unité caméra (12) avec possibilité de déplacement,
et sachant que l'élément porteur (11) présente une ouverture (11.1) sur le côté avant, à travers laquelle des images peuvent être prises au moins dans la position (Ib) de prise d'images pour l'unité caméra (12),
et avec au moins un espace libre (11.2) sur le côté avant entre l'ouverture (11.1) sur le côté avant dans l'élément porteur (11) et l'unité caméra (12), afin de pouvoir transférer l'unité caméra (12) dans la position (Ib) de prise d'images,
**caractérisé en ce que** l'espace libre (11.2) sur le côté avant peut être fermé par un élément d'étanchéité (15), sachant que l'élément d'étanchéité (15) assure l'étanchéité de l'espace libre sur le côté avant sur l'ensemble du mouvement de va-et-vient de l'unité caméra (12) entre la position de repos (la) et la position (Ib) de prise d'images.

2. Dispositif (10) selon la revendication 1, **caractérisé en ce que** l'élément d'étanchéité (15) est fixé d'une part sur l'élément porteur (11) et d'autre part sur l'unité caméra (12), sachant en particulier que l'élément d'étanchéité (15) est fixé sur l'élément porteur (11) dans la région de l'espace libre (11.2) sur le côté avant, et sur l'unité caméra (12) dans la région avant.

3. Dispositif (10) selon la revendication 1 ou 2, **caractérisé en ce qu'**une bride de fixation (11.3, 12.3) pour l'élément d'étanchéité (15) est prévue sur l'élément porteur (11) et/ou sur l'unité caméra (12), sachant en particulier que la bride de fixation (11.3, 12.3) est réalisée sous la forme d'une surface par endroits plane, sous la forme d'une rainure et/ou d'une échancrure.

4. Dispositif (10) selon l'une des revendications précédentes, **caractérisé en ce que** l'élément d'étanchéité (15) peut être fixé sur l'élément porteur (11) et/ou sur l'unité caméra (12) par l'intermédiaire de moyens de maintien (16), sachant en particulier que la bride de fixation (11.3, 12.3) sert à la fixation par les moyens de maintien (16).

5. Dispositif (10) selon l'une des revendications précédentes, **caractérisé en ce que** le moyen de maintien (16) sur l'élément porteur (11) présente un élément de soutien (16.1), en particulier sous la forme d'un cadre de soutien, et l'élément d'étanchéité (15) est serré entre l'élément porteur (11) et le cadre de soutien (16.1), et/ou **en ce que** le moyen de maintien (16) sur l'unité caméra (12) est réalisé sous la forme d'un élément de serrage (16.2), en particulier sous la forme d'une bague de serrage ou d'un fil métallique de serrage.

6. Dispositif (10) selon l'une des revendications précédentes, **caractérisé en ce que** l'élément d'étanchéité (15) présente une membrane de protection, qui est en particulier à grande flexibilité et qui présente une forme de base préformée, et/ou **en ce que** l'élément d'étanchéité (15), en particulier sous la forme de la membrane de protection (15.1), présente au moins un moyen d'extension (15.2).

7. Dispositif (10) selon l'une des revendications précédentes, **caractérisé en ce que** l'élément d'étanchéité (15) est réalisé en forme de poils de brosse (15.7), et les poils de brosse individuels ferment totalement l'espace libre (11.2) sur le côté avant.

8. Dispositif (10) selon l'une des revendications précédentes, **caractérisé en ce que** l'élément porteur (11) présente un canal de déplacement pour l'unité caméra (12), dans lequel est reçue l'unité caméra (12), et l'unité caméra (12) présente, entre la position de repos (la) et la position (Ib) de prise d'images, une distance par rapport à un côté intérieur du canal de déplacement qui reste pour l'essentiel constante.

9. Dispositif (10) selon l'une des revendications précédentes, **caractérisé en ce que** l'élément d'étanchéité (15) en forme de poils de brosse est disposé sur l'unité caméra (12), et les poils de brosse individuels coopèrent par leurs extrémités libres avec les côtés intérieurs du canal de déplacement.

10. Dispositif (10) selon l'une des revendications précédentes, **caractérisé en ce que** l'élément d'étanchéité (15) en forme de poils de brosse est disposé sur l'élément porteur (11) et coopère par ses extrémités libres avec l'unité caméra (12).

11. Dispositif (10) selon l'une des revendications précédentes, **caractérisé en ce que** l'élément d'étanchéité (15) est structuré à la manière d'un soufflet, et au moins un élément (15.9) à effet de ressort est disposé dans l'élément d'étanchéité (15) du genre soufflet de telle sorte que l'élément d'étanchéité (15) du genre soufflet est tendu de manière flexible dans l'espace libre (11.2) sur le côté avant et assure l'étanchéité dudit espace libre.

12. Dispositif (10) selon l'une des revendications précédentes, **caractérisé en ce que** l'élément d'étanchéité (15) du genre soufflet est disposé avec les éléments (15.9) à effet de ressort sur l'élément porteur (11), et les éléments (15.9) à effet de ressort pressent l'élément d'étanchéité (15) du genre soufflet, en particulier une enveloppe (15.8) du genre caoutchouc, contre l'unité caméra (12).

13. Dispositif (10) selon l'une des revendications précédentes, **caractérisé en ce qu'**un élément (17) formant couvercle est prévu devant l'ouverture (11.1) sur le côté avant de l'élément porteur (11), élément qui ferme l'ouverture (11.1) sur le côté avant au moins dans la position de repos (la) de l'unité caméra (12).

14. Dispositif (10) selon l'une des revendications précédentes, **caractérisé en ce que** l'élément porteur (11) est réalisé au moins pour partie sous forme de boîtier ou dans un boîtier, sachant en particulier qu'une ouverture de boîtier (18.1) est prévue comme ouverture d'aération dans une région arrière du boîtier.

15. Procédé pour faire fonctionner un dispositif (10) avec un élément porteur (11), sur lequel est disposée une unité caméra (12) qui sert à la prise d'images de la zone extérieure d'un véhicule automobile, et avec au moins un mécanisme d'entraînement (14) pour l'unité caméra (12), qui sert à déplacer en va-et-vient l'unité caméra (12) entre une position de repos (la) et une position (Ib) de prise d'images, sachant que le mécanisme d'entraînement (14) est disposé sur l'élément porteur (11), afin de maintenir l'unité caméra (12) avec possibilité de déplacement, et sachant que l'élément porteur (11) présente une ouverture (11.1) sur le côté avant avec un espace libre (11.2) sur le côté avant, ouverture à travers laquelle des images peuvent être prises au moins dans la position (Ib) de prise d'images pour l'unité caméra (12), et avec au moins un espace libre (11.2) sur le côté avant entre l'ouverture (11.1) sur le côté avant dans l'élément porteur (11) et l'unité caméra (12), afin de pouvoir transférer l'unité caméra (12) dans la position (Ib) de prise d'images, **caractérisé en ce que** l'unité caméra (12) est déplacée en va-et-vient entre la position de repos (la) et la position (Ib) de prise d'images en étant étanchée en permanence par rapport à l'espace libre (11.2) sur le côté avant.
